# EUROPEAN PATENT APPLICATION

(11) **EP 4 400 620 A1**
(43) Date of publication of application: **17.07.2024**
(21) Application number: 23801657.0
(22) Date of filing: 07.08.2023
(51) Int. Cl.: C22C 21/06, C22C 1/03, C22F 1/047

(54) **5XXX ALUMINUM ALLOY CAPABLE OF REFINING MIG WELD GRAINS, PREPARATION METHOD THEREFOR, USE THEREOF**

(30) Priority: 30.11.2022 CN 202211519706
(71) Applicant: Chinalco Materials Application Research Institute Co., Ltd, Changping District Beijing 100044 (CN)
(72) Inventor: REN, Simeng, Beijing 100044 (CN); XU, Zhiqiang, Beijing 100044 (CN); LI, Yingdong, Beijing 100044 (CN); LI, Xiulei, Beijing 100044 (CN); WANG, Guojun, Beijing 100044 (CN); LIU, Zhenshan, Beijing 100044 (CN); HUANG, Mingdong, Beijing 100044 (CN)
(74) Representative: Studio Torta S.p.A.
(86) International application number: PCT/CN2023/111577
(87) International publication number: WO 2024/113944

(57) **Abstract**

The present disclosure provides a 5XXX aluminum alloy capable of refining MIG weld grains and a preparation method and application thereof. The 5XXX aluminum alloy includes the following compositions in percentage by weight: 4.0-4.9% of Mg, 0.2-0.5% of Mn, 0.01-0.06% of Ti, 0.1-0.35% of Fe, less than 0.05% of B, and the balance of Al and inevitable impurities. The preparation method includes subjecting raw materials to casting to obtain an ingot, where the Ti is added through an Al-5Ti-1B intermediate alloy at 750-770°C; subjecting the ingot to homogenization treatment at 500-520°C for 3-5 h to obtain a homogenized ingot; and subjecting the homogenized ingot to hot rolling, cold rolling and annealing. The 5XXX aluminum alloy of the present disclosure can effectively adjust the grain size in a weld zone and a fusion zone when applied to MIG welding, grains in the weld zone are refined to 30-40 µm, and the weld strength is greatly improved.

## Description

### Technical Field

The present disclosure relates to the technical field of aluminum alloys, and specifically relates to a 5XXX aluminum alloy capable of refining MIG weld grains and a preparation method and application thereof.

### Background

Among a variety of metal materials, aluminum and aluminum alloys are preferred materials for realizing energy saving, emission reduction and weight reduction of new energy vehicles due to low density, high specific strength and good corrosion resistance and welding performance. As non-heat-treatable strengthened aluminum alloys, 5XXX aluminum alloys have many excellent properties, and mechanical properties of the 5XXX aluminum alloys can be improved by an alloying means so as to reduce the situation that the strength of structural parts is improved by increasing the thickness of materials.

Annealed 5XXX series aluminum alloys have high yield ratio and elongation. Doors and engine hood covers of vehicles can be produced by a processing method of cold stamping, and then all parts are assembled to white vehicle bodies by riveting, resistance spot welding, MIG welding and other connection processes. MIG welding has the characteristics of low cost and high automation degree and has been widely used in aluminum alloy vehicle bodies at present. Therefore, higher requirements for the weld strength of the 5XXX aluminum alloys, especially sheets, are also put forward.

### Summary

The main purpose of the present disclosure is to provide a 5XXX aluminum alloy capable of refining MIG weld grains and a preparation method and application thereof, so as to solve the problems of coarse weld grains and low strength of 5XXX aluminum alloy sheets after MIG welding in the prior art.

In order to achieve the above purpose, according to one aspect of the present disclosure, a preparation method of a 5XXX aluminum alloy capable of refining MIG weld grains is provided. The 5XXX aluminum alloy includes the following compositions in percentage by weight: 4.0-4.9% of Mg, 0.2-0.5% of Mn, 0.01-0.06% of Ti, 0.1-0.35% of Fe, less than 0.05% of B, and the balance of Al and inevitable impurities, where the content of each inevitable impurity is less than 0.05%, and the total content of the impurities is less than 0.15%. The preparation method includes the following steps: step S1, subjecting raw materials of a 5XXX aluminum alloy to casting to obtain an ingot, where the Ti is added through an Al-5Ti-1B intermediate alloy at 750-770°C; step S2, subjecting the ingot to homogenization treatment at a temperature of 500-520°C for 3-5 h to obtain a homogenized ingot; step S3, subjecting the homogenized ingot to hot rolling to obtain a hot rolled sheet; step S4, subjecting the hot rolled sheet to cold rolling to obtain a cold rolled sheet; and step S5, subjecting the cold rolled sheet to annealing treatment to obtain the 5XXX aluminum alloy capable of refining MIG weld grains.

Further, the 5XXX aluminum alloy includes the following compositions in percentage by weight: 4.5-4.6% of Mg, 0.2-0.3% of Mn, 0.03-0.06% of Ti, 0.1-0.2% of Fe, less than 0.05% of B, and the balance of Al and inevitable impurities, where the content of each inevitable impurity is less than 0.05%, and the total content of the impurities is less than 0.15%.

Further, the hot rolling includes: subjecting the homogenized ingot to first hot rolling to obtain a first hot rolled sheet, and then subjecting the first hot rolled sheet to heat preservation in a furnace, followed by second hot rolling to obtain the hot rolled sheet.

Further, the first hot rolling is conducted at an initial rolling temperature of 500-520°C at a pass reduction of 2-4 mm/pass, and the first hot rolled sheet has a thickness of 25-35 mm.

Further, the heat preservation in a furnace is conducted at a temperature of 505-515°C for 0.3-1 h.

Further, preferably, the second hot rolling is conducted at a pass reduction of 2-4 mm/pass, and the hot rolled sheet has a thickness of 4-6 mm.

Further, the cold rolling is conducted at a pass reduction of 0.5-1 mm/pass, and the cold rolled sheet has a thickness of 2.5-3 mm; and preferably, the annealing treatment is conducted at a temperature of 500-520°C for 40-60 s.

According to another aspect of the present disclosure, a 5XXX aluminum alloy capable of refining MIG weld grains is provided, which is prepared by the preparation method of the present disclosure.

According to another aspect of the present disclosure, a welding method of an aluminum alloy is provided. The 5XXX aluminum alloy is used as a base material to undergo MIG welding with a welding wire, and the welding wire is preferably an ER4043 welding wire.

According to another aspect of the present disclosure, a welded joint is provided. The welded joint is obtained by the welding method and has a weld grain size of 30-40 µm.

According to the present disclosure, by using a specific ratio of the aluminum alloy elements and adding the Al-5Ti-1B intermediate alloy at a specific temperature, the Al-5Ti-1B intermediate alloy plays the role of a refiner. Through combination with a specific processing and preparation technology, the Al-5Ti-1B intermediate alloy can effectively adjust the grain size in a weld zone and a fusion zone when applied to MIG welding, grains in the weld zone are refined to 30-40 µm, and original columnar grains in the fusion zone are changed into equiaxed grains. Moreover, as the specific aluminum alloy compositions and the Al-5Ti-1B intermediate alloy are used in the present disclosure, a good homogenized structure can be achieved by the homogenization treatment at low temperature for a short period of time, and the production cost can be further reduced. The 5XXX aluminum alloy of the present disclosure does not contain rare precious metals, and the titanium is added through the aluminum-titanium-boron intermediate alloy low in cost, so that the cost is controllable, the production line is not required to be changed, and processing production can be realized on a conventional production line. The produced 5XXX aluminum alloy has good weldability. When the 5XXX aluminum alloy is applied in a MIG welding process to prepare a welded joint with an ER4043 welding wire, weld structure grains can be effectively refined, and the weld strength is improved.

### Brief Description of the Drawings

The drawings attached to the specification forming a part of this application are used to provide further understanding of the present disclosure, and exemplary embodiments and descriptions thereof of the present disclosure are used to explain the present disclosure rather than to constitute improper limitations of the present disclosure. In the drawings:
FIG. 1 is a diagram showing the morphology of grains of base materials of alloy sheets according to Comparative Examples 1 to 3 and Examples 1 to 2 of the present disclosure;
FIG. 2 is a diagram showing the morphology of grains in weld zones of MIG welded joints of alloy sheets according to Comparative Examples 1 to 3 and Examples 1 to 2 of the present disclosure;
FIG. 3 is a diagram showing the morphology of grains in fusion zones of MIG welded joints of alloy sheets according to Comparative Examples 1 to 3 and Examples 1 to 2 of the present disclosure; and
FIG. 4 is a diagram showing microhardness curves of MIG welded joints of alloy sheets according to Comparative Example 1 and Example 1 of the present disclosure.

Callouts in the drawings are as follows:
a, Example 1; b, Example 2; c, Comparative Example 1; d, Comparative Example 2; e, Comparative Example 3.

### Detailed Description of the Embodiments

It should be noted that the embodiments in this application and features in the embodiments may be combined with each other without conflict. The present disclosure is described in detail below by referring to the attached drawings and combining with the embodiments.

As described in the background of the present disclosure, the prior art has the problems of coarse weld grains and low strength of 5XXX aluminum alloy sheets after MIG welding. In order to solve the above problems, in a typical embodiment of the present disclosure, a preparation method of a 5XXX aluminum alloy capable of refining MIG weld grains is provided. The 5XXX aluminum alloy includes the following compositions in percentage by weight: 4.0-4.9% of Mg, 0.2-0.5% of Mn, 0.01-0.06% of Ti, 0.1-0.35% of Fe, less than 0.05% of B, and the balance of Al and inevitable impurities, where the content of each inevitable impurity is less than 0.05%, and the total content of the impurities is less than 0.15%. The preparation method includes the following steps: step S1, subjecting raw materials of a 5XXX aluminum alloy to casting to obtain an ingot, where the Ti is added through an Al-5Ti-1B intermediate alloy at 750-770°C; step S2, subjecting the ingot to homogenization treatment at a temperature of 500-520°C for 3-5 h to obtain a homogenized ingot; step S3, subjecting the homogenized ingot to hot rolling to obtain a hot rolled sheet; step S4, subjecting the hot rolled sheet to cold rolling to obtain a cold rolled sheet; and step S5, subjecting the cold rolled sheet to annealing treatment to obtain the 5XXX aluminum alloy capable of refining MIG weld grains.

According to the present disclosure, the raw materials of the 5XXX aluminum alloy are subjected to casting first to obtain an ingot, where the Ti is added through an Al-5Ti-1B intermediate alloy at 750-770°C, so that the Al-5Ti-1B intermediate alloy plays the role of an aluminum alloy refiner simultaneously. Then, the ingot is subjected to homogenization treatment at a temperature of 500-520°C for 3-5 h to obtain a homogenized ingot. As the specific aluminum alloy compositions and the Al-5Ti-1B intermediate alloy are used in the present disclosure, a good homogenized structure can be achieved by the homogenization treatment at low temperature for a short period of time, and the production cost can be further reduced. Then, the homogenized ingot is subjected to hot rolling, cold rolling and annealing treatment in sequence to obtain the 5XXX aluminum alloy capable of refining MIG weld grains.

According to the 5XXX aluminum alloy of the present disclosure, the Mg is added for solution strengthening, the Ti and the Mn are added for fine grain strengthening, and the Fe content is controlled within a specific range. This is because when the contents of the above elements are too low, the strengthening effect is low, and when the contents of the above elements are too high, a variety of intermetallic compounds will be produced, resulting in adverse influence on the overall performance of the aluminum alloy. Therefore, in the present disclosure, the contents of the elements are limited in the above ranges to improve the metal structure. Through the solution strengthening and the fine grain strengthening, the weld strength is improved, and the effect of refining grains in a weld zone and a fusion zone is achieved, so that the elements are more suitable for preparing the 5XXX aluminum alloy by using the preparation method of the present disclosure. Thus, a 5XXX aluminum alloy sheet with more excellent welding performance and finer weld grains is obtained. Moreover, the 5XXX aluminum alloy of the present disclosure does not contain rare precious metals, and the aluminum-titanium-boron intermediate alloy low in cost is used as a Ti source and a refiner, so that the cost is controllable, the production line is not required to be changed, and processing production can be realized on a conventional production line. Through combination with a specific processing and preparation technology, the produced 5XXX aluminum alloy has good weldability. When the 5XXX aluminum alloy is applied in a MIG welding process to prepare a welded joint with an ER4043 welding wire, weld structure grains can be effectively refined, and the weld strength is improved.

The inventor has found in research that when the 5XXX aluminum alloy has a high grain refining degree during MIG welding, the strength and other properties will be improved. On the one hand, the weld strength can be further improved by a 5XXX aluminum alloy base material with higher strength during welding. On the other hand, during preparation of the 5XXX aluminum alloy base material of the present disclosure, the titanium is added through the Al-5Ti-1B intermediate alloy, and the B will be left in the prepared aluminum alloy in a small amount and has a content of generally less than 0.05%. During MIG welding, the matrix of an original base material is partially melted, and TiAl₃ and TiB₂ particles formed by Al, Ti and a small amount of B enter a weld pool when the matrix is melted. The TiB₂ particles with a high melting point are difficult to dissolve and thus remain granular. The TiAl₃ particles are dissolved in the pool so as to provide the solute Ti to the aluminum melt. As the Ti dissolved in the melt has a small wetting angle with the TiB₂ particles, the Ti undergoes segregation towards the TiB₂ particles to form a TiAl₃ coating layer on the TiB₂ particles. During weld solidification, a large number of the TiB₂ particles coated by the TiAl₃ thin layer are used as an effective nucleation base to promote nucleation.

Meanwhile, the TiAl₃ phase that is not completely dissolved in the pool undergoes a peritectic reaction, which also achieves a nucleation effect directly. After the weld solidification, uniform and fine equiaxed grains are formed in a weld zone, and columnar grains in a fusion zone are changed into equiaxed grains. The whole grain structure of a welded joint is refined, and fine grains can be dispersed in more grains due to plastic deformation under an external force. Meanwhile, the grain boundary area is increased by the fine grains, and the effect of hindering dislocation movement is achieved. The fine grains have better mechanical properties than coarse grain materials at normal temperature, so that the hardness of the weld zone and the fusion zone of the welded joint can be greatly improved.

In a preferred embodiment, the 5XXX aluminum alloy includes the following compositions in percentage by weight: 4.5-4.6% of Mg, 0.2-0.3% of Mn, 0.03-0.06% of Ti, 0.1-0.2% of Fe, less than 0.05% of B, and the balance of Al and inevitable impurities, where the content of each inevitable impurity is less than 0.05%, and the total content of the impurities is less than 0.15%. The aluminum alloy with the above compositions has better effects of refining weld structure grains and improving the weld strength during MIG welding.

More preferably, the aluminum alloy includes the following compositions in percentage by weight: 4.56% of Mg, 0.23% of Mn, 0.041% of Ti, 0.19% of Fe, less than 0.05% of B, and the balance of Al and inevitable impurities; or the aluminum alloy includes the following compositions: 4.54% of Mg, 0.23% of Mn, 0.058% of Ti, 0.19% of Fe, less than 0.05% of B, and the balance of Al and inevitable impurities; or the aluminum alloy includes the following compositions: 4.00% of Mg, 0.20% of Mn, 0.010% of Ti, 0.10% of Fe, less than 0.05% of B, and the balance of Al and inevitable impurities; or the aluminum alloy includes the following compositions: 4.50% of Mg, 0.20% of Mn, 0.030% of Ti, 0.10% of Fe, less than 0.05% of B, and the balance of Al and inevitable impurities; or the aluminum alloy includes the following compositions: 4.60% of Mg, 0.30% of Mn, 0.060% of Ti, 0.20% of Fe, less than 0.05% of B, and the balance of Al and inevitable impurities; or the aluminum alloy includes the following compositions: 4.90% of Mg, 0.50% of Mn, 0.060% of Ti, 0.35% of Fe, less than 0.05% of B, and the balance of Al and inevitable impurities.

During actual production, in a preferred embodiment, the hot rolling includes: subjecting the homogenized ingot to first hot rolling to obtain a first hot rolled sheet, and then subjecting the first hot rolled sheet to heat preservation in a furnace, followed by second hot rolling to obtain the hot rolled sheet. The hot rolling is conducted for two times, so that convenience is provided for uniformly rolling the aluminum alloy to a target thickness, the material has better structure uniformity, the grains are further refined, and the strength is improved.

The initial rolling temperature is controlled, which is beneficial to plastic deformation and controlling the final rolling temperature of the material. When the initial rolling temperature is too low, the hot workability of the alloy is reduced, leading to cracks, edge cracks and other phenomena in the rolling process. When the initial rolling temperature is too high, properties are not improved, and energy waste is caused. Based on such situations, in a preferred embodiment, the first hot rolling is conducted at an initial rolling temperature of 500-520°C at a pass reduction of 2-4 mm/pass, and the first hot rolled sheet has a thickness of 25-35 mm. Under the conditions of the first hot rolling process, more convenience is provided for the deformation process and the subsequent heat treatment process.

The heat preservation in a furnace is conducted, so that heat loss caused by convection and radiation in the hot rolling process can be reduced, it is ensured that the whole hot rolling process is carried out at a set high temperature, and adverse influence on the quality of the material caused by a large temperature difference between the inside and outside of a rolled workpiece is avoided. Therefore, in a preferred embodiment, the heat preservation in a furnace is conducted at a temperature of 505-515°C for 0.3-1 h, so that the material can better retain uniformity in composition and structure, and a good foundation is provided for obtaining a base material with a fine grain structure subsequently.

The pass reduction of the second hot rolling is consistent with that of the first hot rolling, so that the material structure is more uniform. Therefore, in a preferred embodiment, the second hot rolling is conducted at a pass reduction of 2-4 mm/pass, and the hot rolled sheet has a thickness of 4-6 mm.

When the cold rolling is conducted at a too large rate or a too small rate, the sheet has high anisotropy, leading to reduced properties of the aluminum alloy and coarse grains. Therefore, in a preferred embodiment, the cold rolling is conducted at a pass reduction of 0.5-1 mm/ pass, and the cold rolled sheet has a thickness of 2.5-3 mm.

The annealing is conducted, so that the size and orientation of recrystallized grains can be controlled, and the anisotropy of the alloy is improved. Therefore, preferably, the annealing treatment is conducted at a temperature of 500-520°C for 40-60 s, so that the alloy grains can better meet refining requirements.

In another typical embodiment of the present disclosure, a 5XXX aluminum alloy capable of refining MIG weld grains is also provided, which is prepared by the preparation method of the present disclosure.

In another typical embodiment of the present disclosure, a welding method of an aluminum alloy is also provided. The 5XXX aluminum alloy is used as a base material to undergo MIG welding with a welding wire, and the welding wire is preferably an ER4043 welding wire.

In another typical embodiment of the present disclosure, a welded joint is also provided. The welded joint is obtained by the welding method and has a weld grain size of 30-40 µm, so that weld grains are better refined, and the strength is greatly improved. Parameters of the MIG welding process may be conventional parameters in the art.

This application is further described in detail below in combination with specific embodiments, and the embodiments shall not be construed as limitations of the protection scope as required by this application.

### Example 1

A 5XXX aluminum alloy in Example 1 includes the compositions as shown in Table 1. A preparation method of the 5XXX aluminum alloy includes:
(1) subjecting raw materials of aluminum alloy compositions to casting to obtain an ingot, where the Ti was added through an Al-5Ti-1B intermediate alloy at a temperature of 760°C during the casting;
(2) subjecting the ingot to homogenization treatment at a temperature of 510°C under heat preservation for 3 h to obtain a homogenized ingot;
(3) subjecting the homogenized ingot to hot rolling at an initial rolling temperature of 510°C, rolling to 30 mm at 3 mm/pass, heat preservation in a furnace at 510°C for 0.5 h and rolling to 5 mm at 3 mm/pass continuously, followed by natural cooling to room temperature to obtain a hot rolled sheet;
(4) subjecting the hot rolled sheet to cold rolling to 2.5 mm at 1 mm/pass to obtain a cold rolled sheet;
(5) subjecting the cold rolled sheet to annealing at a temperature of 520°C for 60 s to obtain a 5XXX aluminum alloy sheet; and
(6) subjecting the 5XXX aluminum alloy sheet as a base material to MIG welding with an ER4043 welding wire at welding parameters of 104 A and 0.8 m/min, observing metallographic phases of the base material and a welded joint, and measuring the grain size in a weld zone.

### Examples 2 to 6

Examples 2 to 6 are different from Example 1 in that 5XXX aluminum alloys include different compositions, as shown in Table 1 for detail.

### Example 7

A 5XXX aluminum alloy in Example 7 includes the same compositions as Example 1. A preparation method of the 5XXX aluminum alloy includes:
(1) subjecting raw materials of aluminum alloy compositions to casting to obtain an ingot, where the Ti was added through an Al-5Ti-1B intermediate alloy at a temperature of 750°C during the casting;
(2) subjecting the ingot to homogenization treatment at a temperature of 500°C under heat preservation for 5 h to obtain a homogenized ingot;
(3) subjecting the homogenized ingot to hot rolling at an initial rolling temperature of 500°C, rolling to 35 mm at 2 mm/pass, heat preservation in a furnace at 505°C for 1 h and rolling to 6 mm at 2 mm/pass continuously, followed by natural cooling to room temperature to obtain a hot rolled sheet;
(4) subjecting the hot rolled sheet to cold rolling to 3 mm at 0.5 mm/pass to obtain a cold rolled sheet;
(5) subjecting the cold rolled sheet to annealing at a temperature of 500°C for 60 s to obtain a 5XXX aluminum alloy sheet; and
(6) subjecting the 5XXX aluminum alloy sheet as a base material to MIG welding with an ER4043 welding wire at welding parameters of 104 A and 0.8 m/min, and measuring the grain size in a weld zone of the base material and a welded joint.

### Example 8

A 5XXX aluminum alloy in Example 8 includes the same compositions as Example 1. A preparation method of the 5XXX aluminum alloy includes:
(1) subjecting raw materials of aluminum alloy compositions to casting to obtain an ingot, where the Ti was added through an Al-5Ti-1B intermediate alloy at a temperature of 770°C during the casting;
(2) subjecting the ingot to homogenization treatment at a temperature of 520°C under heat preservation for 3 h to obtain a homogenized ingot;
(3) subjecting the homogenized ingot to hot rolling at an initial rolling temperature of 520°C, rolling to 25 mm at 4 mm/pass, heat preservation in a furnace at 515°C for 0.3 h and rolling to 4 mm at 4 mm/pass continuously, followed by natural cooling to room temperature to obtain a hot rolled sheet;
(4) subjecting the hot rolled sheet to cold rolling to 2.5 mm at 1 mm/pass to obtain a cold rolled sheet;
(5) subjecting the cold rolled sheet to annealing at a temperature of 520°C for 40 s to obtain a 5XXX aluminum alloy sheet; and
(6) subjecting the 5XXX aluminum alloy sheet as a base material to MIG welding with an ER4043 welding wire at welding parameters of 104 A and 0.8 m/min, and measuring the grain size in a weld zone of the base material and a welded joint.

### Comparative Example 1

Comparative Example 1 is different from Example 1 in that a 5XXX aluminum alloy includes different compositions, and the Ti was added through an Al-5Ti-0.2B intermediate alloy during the casting, as shown in Table 1 for detail.

### Comparative Example 2

Comparative Example 2 is different from Example 1 in that a 5XXX aluminum alloy includes different compositions, and the Ti was added through an Al-5Ti-0.2B intermediate alloy during the casting, as shown in Table 1 for detail.

### Comparative Example 3

A 5XXX aluminum alloy in Comparative Example 3 includes the compositions as shown in Table 1. A preparation method of the 5XXX aluminum alloy includes:
(1) subjecting raw materials of aluminum alloy compositions to casting to obtain an ingot, where the Ti was added through an Al-5Ti-0.2B intermediate alloy at a temperature of 710°C during the casting;
(2) subjecting the ingot to homogenization treatment at a temperature of 510°C under heat preservation for 5 h to obtain a homogenized ingot;
(3) subjecting the homogenized ingot to hot rolling at an initial rolling temperature of 510°C and rolling to 5 mm at 3 mm/pass, followed by natural cooling to room temperature to obtain a hot rolled sheet;
(4) subjecting the hot rolled sheet to cold rolling to 2.5 mm at 0.75 mm/pass to obtain a cold rolled sheet;
(5) subjecting the cold rolled sheet to annealing at a temperature of 500°C for 30 s to obtain a 5XXX aluminum alloy sheet; and
(6) subjecting the 5XXX aluminum alloy sheet as a base material to MIG welding with an ER4043 welding wire at welding parameters of 104 A and 0.8 m/min, observing metallographic phases of the base material and a welded joint, and measuring the grain size in a weld zone.

### Comparative Example 4

Comparative Example 4 is different from Example 1 in that a 5XXX aluminum alloy includes different compositions, as shown in Table 1 for detail.

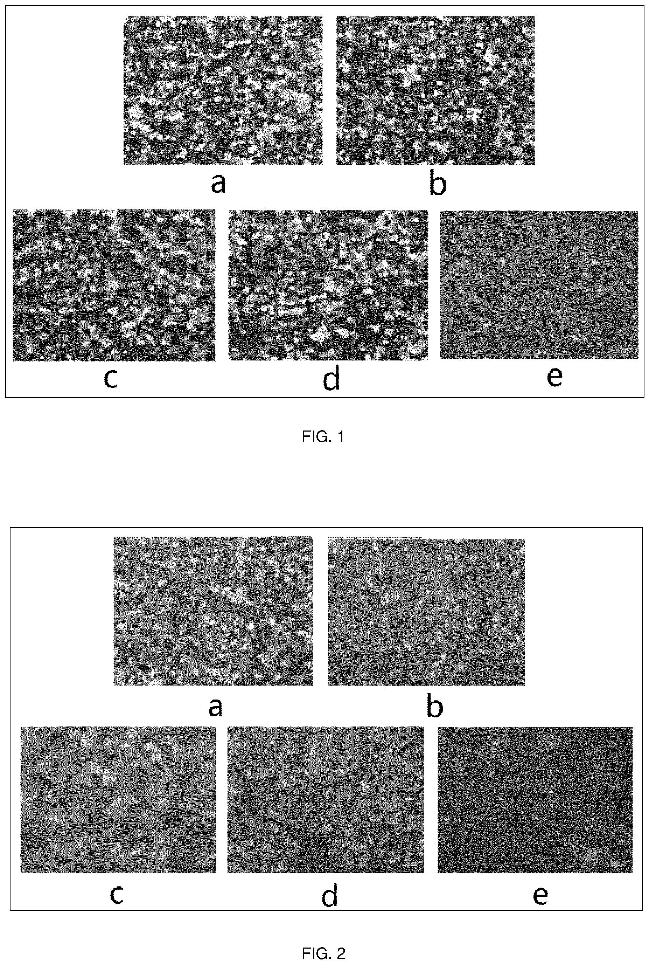

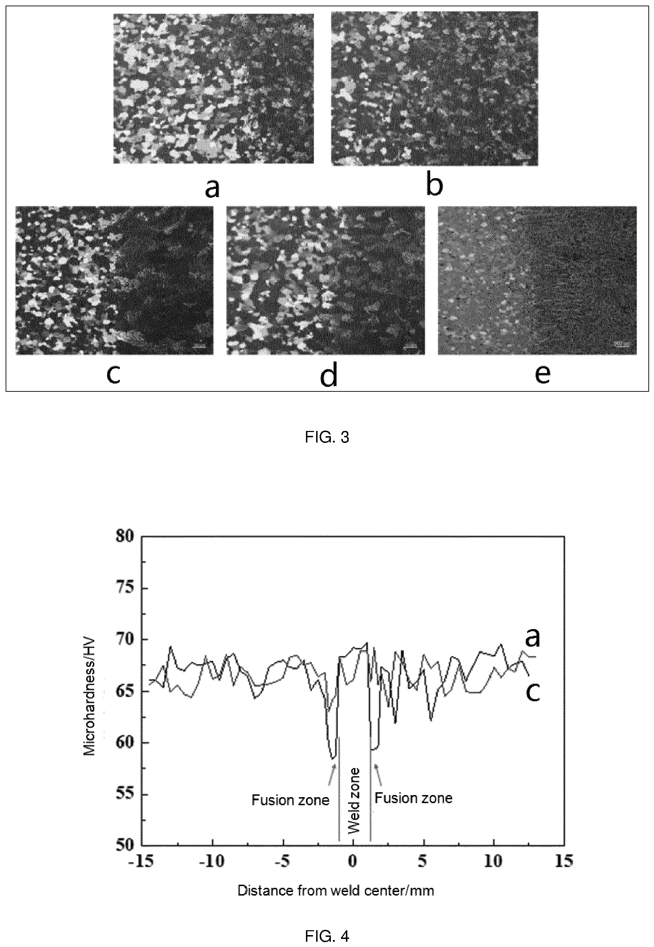

With reference to GB/T 3246.1-2012 "Wrought aluminum and aluminum alloys products inspection method for structure Part 1: Inspection method for microstructure", the grain size in weld zones of joints was rated. The grain size and grain size level of grains of base materials and weld zones in Examples 1 to 8 and Comparative Examples 1 to 4 are as shown in Table 2. The morphology of grains of base materials of alloy sheets in Examples 1 to 2 and Comparative Examples 1 to 3 is as shown in FIG. 1; the morphology of grains in weld zones of MIG welded joints of alloy sheets in Examples 1 to 2 and Comparative Examples 1 to 3 is as shown in FIG. 2; the morphology of grains in fusion zones of MIG welded joints of alloy sheets in Examples 1 to 2 and Comparative Examples 1 to 3 is as shown in FIG. 3; and microhardness curves of MIG welded joints of alloy sheets in Example 1 and Comparative Example 1 is as shown in FIG. 4.

**Table 1**

| Composition of alloy (wt%) | Mg | Mn | Ti | Fe | B |
|---|---|---|---|---|---|
| Example 1 | 4.56 | 0.23 | 0.041 | 0.19 | <0.05 |
| Example 2 | 4.54 | 0.23 | 0.058 | 0.19 | <0.05 |
| Example 3 | 4.00 | 0.20 | 0.010 | 0.10 | <0.05 |
| Example 4 | 4.50 | 0.20 | 0.030 | 0.10 | <0.05 |
| Example 5 | 4.60 | 0.30 | 0.060 | 0.20 | <0.05 |
| Example 6 | 4.90 | 0.50 | 0.060 | 0.35 | <0.05 |
| Comparative Example 1 | 4.51 | 0.23 | 0.010 | 0.20 | <0.05 |
| Comparative Example 2 | 4.59 | 0.23 | 0.023 | 0.19 | <0.05 |
| Comparative Example 3 | 4.58 | 0.40 | 0.038 | 0.13 | <0.05 |
| Comparative Example 4 | 3.50 | 0.10 | 0.000 | 0.05 | <0.05 |

**Table 2**

| Serial number | Base material zone | | Weld zone | |
|---|---|---|---|---|
| | Grain size (µm) | Grain size level | Grain size (µm) | Grain size level |
| Example 1 | 35.00 | 6.38 | 34.63 | 6.42 |
| Example 2 | 33.10 | 6.55 | 33.57 | 6.51 |
| Example 3 | 37.36 | 6.12 | 38.36 | 6.15 |
| Example 4 | 35.38 | 6.21 | 36.23 | 6.23 |
| Example 5 | 36.62 | 6.23 | 35.13 | 6.18 |
| Example 6 | 37.35 | 6.15 | 35.52 | 6.12 |
| Example 7 | 34.36 | 6.36 | 35.02 | 6.33 |
| Example 8 | 34.52 | 6.38 | 34.95 | 6.35 |
| Comparative Example 1 | 34.63 | 6.42 | 60.37 | 4.81 |
| Comparative Example 2 | 33.40 | 6.52 | 43.01 | 5.79 |
| Comparative Example 3 | 22.01 | 7.02 | 134.29 | 2.51 |
| Comparative Example 4 | 45.75 | 5.51 | 61.02 | 4.81 |

From the above tables, it can be seen that compared with comparative examples, the various examples of the present disclosure have the advantages that by using a specific ratio of the aluminum alloy elements and adding the Al-5Ti-1B intermediate alloy at a specific temperature, the Al-5Ti-1B intermediate alloy plays the role of a refiner. Through combination with a specific processing and preparation technology, while ensuring that grains of a base material have a high refining degree, the Al-5Ti-1B intermediate alloy can effectively adjust the grain size in a weld zone and a fusion zone when applied to MIG welding, grains in the weld zone are refined to 30-40 µm, and original columnar grains in the fusion zone are changed into equiaxed grains. Moreover, as the specific aluminum alloy compositions and the Al-5Ti-1B intermediate alloy are used in the present disclosure, a good homogenized structure can be achieved by the homogenization treatment at low temperature for a short period of time, and the production cost can be further reduced. The 5XXX aluminum alloy of the present disclosure does not contain rare precious metals, and the titanium is added through the aluminum-titanium-boron intermediate alloy low in cost, so that the cost is controllable, the production line is not required to be changed, and processing production can be realized on a conventional production line. The produced 5XXX aluminum alloy has good weldability. When the 5XXX aluminum alloy is applied in a MIG welding process to prepare a welded joint with an ER4043 welding wire, weld structure grains can be effectively refined, and the weld strength is improved.

The descriptions above are merely preferred embodiments of the present disclosure and are not intended to limit the present disclosure, and various modifications and alterations of the present disclosure may be made by persons skilled in the art. Any modifications, equivalent substitutions, improvements and the like made within the spirit and principles of the present disclosure shall be included in the protection scope of the present disclosure.

## Claims

1. A preparation method of a 5XXX aluminum alloy capable of refining MIG weld grains, wherein the 5XXX aluminum alloy comprises the following compositions in percentage by weight: 4.0-4.9% of Mg, 0.2-0.5% of Mn, 0.01-0.06% of Ti, 0.1-0.35% of Fe, less than 0.05% of B, and the balance of Al and inevitable impurities, the content of each inevitable impurity is less than 0.05%, and the total content of the impurities is less than 0.15%; and the preparation method comprises the following steps:
step S1, subjecting raw materials of a 5XXX aluminum alloy to casting to obtain an ingot, wherein the Ti is added through an Al-5Ti-1B intermediate alloy at 750-770°C;
step S2, subjecting the ingot to homogenization treatment at a temperature of 500-520°C for 3-5 h to obtain a homogenized ingot;
step S3, subjecting the homogenized ingot to hot rolling to obtain a hot rolled sheet;
step S4, subjecting the hot rolled sheet to cold rolling to obtain a cold rolled sheet; and
step S5, subjecting the cold rolled sheet to annealing treatment to obtain the 5XXX aluminum alloy capable of refining MIG weld grains.

2. The preparation method according to claim 1, wherein the 5XXX aluminum alloy comprises the following compositions in percentage by weight: 4.5-4.6% of Mg, 0.2-0.3% of Mn, 0.03-0.06% of Ti, 0.1-0.2% of Fe, less than 0.05% of B, and the balance of Al and inevitable impurities, the content of each inevitable impurity is less than 0.05%, and the total content of the impurities is less than 0.15%.

3. The preparation method according to claim 1 or 2, wherein the hot rolling comprises: subjecting the homogenized ingot to first hot rolling to obtain a first hot rolled sheet, and then subjecting the first hot rolled sheet to heat preservation in a furnace, followed by second hot rolling to obtain the hot rolled sheet.

4. The preparation method according to claim 3, wherein the first hot rolling is conducted at an initial rolling temperature of 500-520°C at a pass reduction of 2-4 mm/pass, and the first hot rolled sheet has a thickness of 25-35 mm.

5. The preparation method according to claim 3, wherein the heat preservation in a furnace is conducted at a temperature of 505-515°C for 0.3-1 h.

6. The preparation method according to claim 3, wherein the second hot rolling is conducted at a pass reduction of 2-4 mm/pass, and the hot rolled sheet has a thickness of 4-6 mm.

7. The preparation method according to claim 1 or 2, wherein the cold rolling is conducted at a pass reduction of 0.5-1 mm/pass, and the cold rolled sheet has a thickness of 2.5-3 mm; and/or the annealing treatment is conducted at a temperature of 500-520°C for 40-60 s.

8. A 5XXX aluminum alloy capable of refining MIG weld grains, wherein the 5XXX aluminum alloy is prepared by the preparation method according to any one of claims 1 to 7.

9. A welding method of an aluminum alloy, wherein the 5XXX aluminum alloy according to claim 8 is used as a base material to undergo MIG welding with a welding wire, and the welding wire is an ER4043 welding wire.

10. A welded joint, wherein the welded joint is obtained by the welding method according to claim 9 and has a weld grain size of 30-40 µm.
